# EUROPÄISCHE PATENTSCHRIFT

(11) **EP 0 917 412 B1**
(45) Veröffentlichungstag und Bekanntmachung des Hinweises auf die Patenterteilung: **26.02.2003**
(21) Anmeldenummer: 98119611.6
(22) Anmeldetag: 16.10.1998
(51) Int. Cl.: H05B 41/282, H02M 7/5383

(54) **Freischwingende Oszillatorschaltung mit einfacher Anlaufschaltung**
Self-oscillating circuit with simplified startup circuit
Circuit auto-oscillant avec circuit de démarrage simplifié

(30) Priorität: 18.11.1997 DE 19751063
(43) Veröffentlichungstag der Anmeldung: 19.05.1999
(73) Patentinhaber: Patent-Treuhand-Gesellschaft für elektrische Glühlampen mbH, 81543 München (DE)
(72) Erfinder: Fischer, Klaus, 86163 Augsburg (DE); Schmitt, Harald, 80689 München (DE)

(56) Entgegenhaltungen:
- EP-A- 0 781 077
- DE-A- 19 729 768
- US-A- 4 745 537
- US-A- 5 140 225
- US-A- 5 592 367

## Beschreibung

Diese Erfindung bezieht sich auf eine Betriebsschaltung für eine Niederdruck-Gasentladungslampe mit einem Gleichrichter, mit einer freischwingenden Halbbrücke mit spannungsgesteuerten Feldeffekt- oder IGBT-Transistoren zur Erzeugung einer Hochfrequenzausgangsleistung für die Niederdruck-Gasentladungslampe aus einer Versorgungsleistung und mit einer Anlaufschaltung zum Ingangsetzen der freischwingenden Oszillation mit einem zwischen eine Ansteuerschaltung an einem Steueranschluss eines Feldeffekt- oder IGBT-Transistors und ein Bezugspotential des Feldeffekt- oder IGBT-Transistors geschalteten Anlaufkondensator.

Ein für diese Erfindung wichtiger Gesichtspunkt solcher Betriebsschaltungen resultiert aus der Notwendigkeit, die freischwingende Oszillation des Oszillators beim Betriebsstart in Gang zu setzen. Häufig werden zur Erzeugung der freischwingenden Oszillation z. B. mitkoppelnde Steuertransformatoren zur Ansteuerung der Schaltelemente des Oszillators verwendet. Der Mitkopplungseffekt entsteht jedoch erst im Oszillationsbetrieb selbst und muss zu Anfang sozusagen durch einen äußeren Anstoß erst erzeugt werden.

Eine bekannte Lösung für eine Anlaufschaltung, die diesen Anstoß beim Einschalten der Versorgungsleistung erzeugt, kann der deutschen Anmeldung DE 195 48 506 A1 entnommen werden. Dabei wird nach Einschalten der Versorgungsleistung ein Kondensator über einen Widerstand so lange aufgeladen, bis die Durchbruchspannung eines Diac erreicht ist. Dessen Durchbruch entlädt einen Teil der in dem Kondensator gespeicherten Ladung in eine Ansteuerschaltung eines Feldeffekttransistors eines Halbbrückenoszillators. Weitere Einzelheiten sind dem zitierten Dokument zu entnehmen.

Der im Stand der Technik verwendete Diac stellt einen wesentlichen Nachteil der konventionellen Lösung dar. Es hat sich nämlich gezeigt, dass Diacs im Vergleich zu anderen in den Betriebsschaltungen verwendeten Bauelementen eine überdurchschnittlich hohe Ausfallrate zeigen und damit zu unnötig hohen Ausfallraten der mit ihnen ausgestatteten elektronischen Vorschaltgeräte bzw. anderer Betriebsschaltungen führen.

Es wird deswegen auf die Verwendung eines Diacs verzichtet. Statt dessen ist ein Kondensator vorgesehen, der hier als Anlaufkondensator bezeichnet wird. Der Anlaufkondensator hat die Aufgabe, bei zunehmender Aufladung durch seinen Anschluss an ein Bezugspotential eines Schaltelements, etwa ein Leistungsversorgungszweig, nach dem Einschalten der Leistungsversorgung eine Ansteuerschaltung des Oszillators bzw. eines seiner Schaltelemente in die Lage zu versetzen, einen ersten Schaltvorgang des betreffenden Schaltelements hervorzurufen. Dabei ist insbesondere daran zu denken, dass bei spannungsgesteuerten Schaltelementen hierzu keine sehr hohen Ströme, sondern lediglich eine gewisse Spannung erforderlich ist. Spannungsgesteuerte Schaltelemente haben hinsichtlich ihres Ein- oder Ausschaltvorgangs grundsätzlich eine definierte Schwellenspannung. Die Diode mit ihrem Durchbruchvorgang, die die Erfindung, wie erläutert, vermeiden soll, kann also ersetzt werden durch Heranfahren an den und Überschreiten des Spannungsschwellenwerts des Schaltelements. Dieser Vorgang wird durch den beim Einschalten der Leistungsversorgung sich aufladenden Anlaufkondensator direkt oder indirekt bewirkt.

Dies kann beispielsweise dadurch geschehen, dass das Potential einer komplexeren Ansteuerschaltung, auf die im folgenden näher eingegangen wird, insgesamt durch den Anlaufkondensator verschoben wird. Es ist aber nicht unbedingt notwendig, eine komplexere Ansteuerschaltung vorzusehen; vielmehr kann im einfachsten Fall hier auch nur ein Anschlusspunkt einer wie auch immer gearteten Mitkopplungseinrichtung für die freischwingende Oszillation (etwa der Sekundärwicklung eines Steuertransformators) als "Ansteuerschaltung" im Minimalsinn vorgesehen sein, so dass die an dem Anlaufkondensator anliegende Spannung praktisch unmittelbar an den Steueranschluss des spannungsgesteuerten Schaltelements angreift. Diese einfachen "Minimalversionen" für eine Ansteuerschaltung könnte man sich im Fall des Steuertransformators beispielsweise dann vorstellen, wenn die Primärwicklung bereits mit der richtigen Phasenverzögerung für die Ansteuerung der Schaltelemente beaufschlagt wird.

Jedenfalls ist die Verwendung eines Anlaufkondensators als einfaches und preiswertes Bauelement vorgesehen, wodurch der Diac mit den beschriebenen Nachteilen überflüssig ist.

Das Aufladen des Anlaufkondensators sollte einfach über einen zwischen den Anlaufkondensator und ein zum Aufladen geeignetes Potential, etwa einen Leistungsversorgungszweig, geschalteten Aufladewiderstand erfolgen, der relativ hochohmig bemessen sein sollte, damit die Anlaufschaltung im Oszillationsbetrieb wenig stört.

Aus der US 5 592 367 ist eine entsprechende Schaltung bekannt, bei der der Aufladewiderstand auf der Gleichstromseite der Gleichrichterbrücke angeschlossen ist. Bei dieser Schaltung kann jedoch vorkommen, dass ein Strom über eine den Aufladewiderstand mit einem stromführenden Anschluss des FET-Transistors verbindende Diode und den noch leicht leitenden FET-Transistor fließt, der genau den Strom über den Anlaufkondensator kompensiert. In diesem Fall kann der Strom über den Anlaufkondensator den FET-Transistor nicht mehr in den leitenden Zustand überführen, so dass ein neuer Startvorgang der Schaltungsanordnung nur durch eine Netzunterbrechung zu erzielen ist.

Aufgabe der Erfindung ist es daher diesen Nachteil durch eine verbesserte Anlaufschaltung zu umgehen.

Dazu sieht die Erfindung eine Betriebsschaltung für eine Niederdruck-Gasentladungslampe mit den im Oberbegriff des Anspruchs 1 aufgeführten Merkmalen vor, die gekennzeichnet ist durch einen zwischen den Anlaufkondensator und eine Netzeingangsseite des Gleichrichters geschalteten Aufladewiderstand und einen parallel zu dem Anlaufkondensator geschalteten Entladewiderstand.

Der Anschluss des Aufladewiderstands auf der Wechselstromseite der Gleichrichterbrücke und die Parallelschaltung eines Entladewiderstands, über den der Anlaufkondensator während der "negativen" Netzhalbwellen entladen wird, vermeidet bei der vorliegenden Anmeldung einen solchen "stabilen Zustand".

Aus der US 5 140 225 ist zwar der Anschluss einer Anlaufschaltung über einen Widerstand auf der Wechselstromseite des Gleichrichters bekannt. Durch die Art der Anschlüsse soll hier jedoch die Verlustleistung während des Aufladens des Anlaufkondensators verringert werden.

Die bei der Schaltungsanordnung aus der US 5 592 367 dem Anlaufkondensator parallelgeschaltete Diode kann nicht dem parallel geschalteten Entladewiderstand bei der vorliegenden Schaltung gleichgestellt werden, da die Diode die falsche Polarität zur Entladung des Anlaufkondensators aufweist.

Eine vorteilhafte Ausgestaltung der Erfindung besteht in einer Entladediode zum zyklischen Entladen des Anlaufkondensators im Oszillationsbetrieb. Ist die freischwingende Oszillation der Betriebsschaltung erst einmal in Gang gekommen, treten auf der anderen Anschlussseite der Entladediode mit der Oszillationsfrequenz Potentialzustände auf, die den Anlaufkondensator über die Entladediode zyklisch entladen. Bei anderen Potentialzuständen sperrt die Entladediode. Sie ist vorzugsweise zwischen den ansteuerschaltungsseitigen Anschluss des Anlaufkondensators und den versorgungszweigfernen Anschluss des Schaltelements, bei einer Brückenschaltung also einen Mittelpunktsabgriff der Brücke, geschaltet.

Wie bereits ausgeführt sind für die konkrete Ausführung des hier allgemein verwendeten Begriffs "Ansteuerschaltung" verschiedene Möglichkeiten denkbar. Zwei bevorzugte Varianten, die sich als für einen zuverlässigen und verlustarmen Betrieb insbesondere einer Halbbrückenschaltung sehr geeignet erwiesen haben, sind die folgenden: Im ersten Fall ist in der Ansteuerschaltung einer Serienschaltung aus einem Widerstand und einer Sekundärwicklung eines Steuertransformators eine Parallelschaltung aus einem Kondensator und einer Spule parallel geschaltet, wobei die Serienschaltung und die Parallelschaltung gemeinsam an dem Steueranschluß des betreffenden Schaltelements angeschlossen sind. Dabei bildet die Parallelschaltung aus Kondensator und Spule einen Schwingkreis. Im zweiten Fall ist die dem Kondensator parallel liegende Spule weggelassen. Funktionsweise, Vorteile und weitere Varianten zu diesen beiden Formen sind folgenden Dokumenten zu entnehmen, deren Offenbarung hierzu in dieser Anmeldung eingeschlossen ist: zum einen die DE 41 29 430 A1 sowie die DE 195 48 506 A1, die bereits erwähnt wurde.

Um den Potentialzustand der Betriebsschaltung vor dem Einschalten für den Anfang des Anlaufvorgangs definiert vorzugeben, kann man z. B. einen Widerstand zwischen einen versorgungszweigfernen Anschluß eines der Schaltelemente und einem Versorgungszweig vorsehen. Durch einen solchen - für einen störungsfreien Normalbetrieb natürlich hochohmigen - Widerstand liegt das Potential des betreffenden versorgungszweigfernen Anschlusses im Ruhezustand auf dem Potential des Versorgungszweiges, d. h. an bestimmten Schaltelementen liegt beim Anlaufvorgang zunächst keine Spannung oder im wesentlichen die gesamte (gleichgerichtete) Versorgungsspannung an.

Im folgenden werden anhand der Figuren drei konkrete Ausrührungsbeispiele für die Erfindung beschrieben, wobei die dabei offenbarten Einzelmerkmale auch in anderen als den gezeigten Kombinationen oder einzeln erfindungswesentlich sein können. Es zeigt:
Figur 1 ein Schaltdiagramm für eine erfindungsgemäße Betriebsschaltung;
Figur 2 eine typische Oszilloskopanzeige zur Verdeutlichung der Zeitverläufe verschiedener Spannungen und Ströme in der Schaltung aus Figur 1 sowie;
Figur 3 ein Schaltdiagramm einer weitgehend Figur 1 entsprechenden Betriebsschaltung, jedoch mit einem alternativen Anschluß der Anlaufschaltung.
Figur 4 ein Schaltdiagramm einer weitgehend Figur 1 entsprechenden Betriebsschaltung, jedoch mit alternativen Ausführungen der Ansteuerschaltungen.

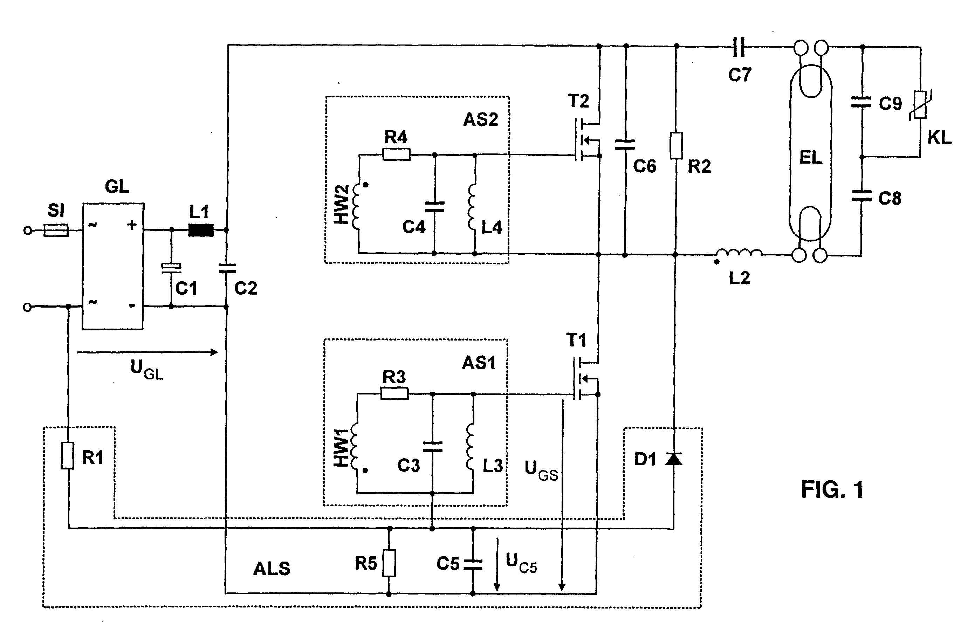

Figur 1 zeigt eine Betriebsschaltung in einem elektronischen Vorschaltgerät für eine Niederdruck-Gasentladungslampe, die als Last EL dargestellt ist. Dabei wird über eine Sicherung SI ein Gleichrichter GL mit Netzspannung versorgt, der einen Elektrolytkondensator C1 speist bzw. auf Spannung hält. An dem Elektrolytkondensator C1 werden zwei Versorgungszweige abgegriffen über ein Filter aus einer Spule L1 in einem der Zweige und einen beide Zweige verbindenden Kondensator C2.

Der in der Figur untere Versorgungszweig hat negatives Potential und definiert das Bezugspotential auf der gleichgerichteten Seite der Betriebsschaltung. Der obere ist der dem gegenüber positive Versorgungszweig. Zwischen beiden Versorgungszweigen liegt eine Halbbrücke aus zwei MOSFET-Transistoren T1 und T2, wobei N-Kanal-Transistoren mit jeweils auf der negativen Seite liegendem Source-Anschluß verwendet sind. Zwischen einem Mittelpunktsabgriff der Halbbrücke und dem positiven Versorgungszweig liegt ein Lastkreis aus einer lastseriellen Lampendrossel L2, der Niederdruck-Gasentladungslampe EL und dem lastseriellen Koppelkondensator C7. Ferner ist eine lastparallele Verschaltung mit zwei Resonanzkondensatoren C8 und C9 und einem Kaltleiter KL für die Lampenzündung vorgesehen.

Zur Schaltentlastung der MOSFET-Transistoren T1 und T2 liegt dem oberen Halbbrückentransistor T2 ein Kondensator C6 parallel.

Zwischen dem Source-Anschluß der MOSFET-Transistoren T1 und T2 als transistorinternem Bezugspotential und dem jeweiligen Gate-Anschluß liegt jeweils eine Ansteuerschaltung AS1 bzw. AS2. Bei dem unteren Halbbrükkentransistor T1 ist die Ansteuerschaltung AS1 jedoch über die im folgenden näher beschriebene Anlaufschaltung ALS mit dem Source-Anschluß des Transistors T1 verbunden. Die Ansteuerschaltungen AS1 und AS2 sind identisch aufgebaut und bestehen aus einer Parallelschaltung einer Spule L3 bzw. L4, eines Kondensators C3 bzw. C4 und einer Serienschaltung aus einer Sekundärwicklung HW1 bzw. HW2 eines Steuertransformators, dessen Primärwicklung die bereits erwähnte Lampendrossel L2 ist, und einem Widerstand R3 bzw. R4. Der Windungssinn der Sekundärwicklungen ist - wie durch die Punkte an HW1, HW2 und L2 angedeutet - entgegengesetzt zueinander.

Die bisher beschriebenen Schaltungselemente sind bekannt und so auch in der bereits zitierten DE 195 48 506 A1 zu finden. Auf diese Anmeldung und den übrigen einschlägigen Stand der Technik wird wegen weiterer Einzelheiten verwiesen.

Im unteren Bereich in Figur 1 ist mit einer gestrichelten Linie die Anlaufschaltung ALS zusammengefaßt, zu der im Grunde aber auch ein Widerstand R2 zwischen dem Mittelpunktsabgriff der Halbbrücke und dem positiven Versorgungszweig gehört. In der Anlaufschaltung befindet sich zunächst ein Anlaufkondensator C5 zwischen der Ansteuerschaltung AS1 des unteren Brückentransistors T1 und dem negativen Versorgungszweig. Parallel dazu liegt ein Entladewiderstand R5. Seriell zu dem Anlaufkondensator C5 liegen in einer Verbindung zu dem Mittelpunktsabgriff der Halbbrücke eine Entladediode D1 mit ihrer Anode auf Seiten des Anlaufkondensators C5, sowie ein Aufladewiderstand R1 in einer Verbindung zu einem Wechselspannungsanschluß auf der Eingangsseite des Gleichrichters GL.

Unmittelbar nach Einschalten der Betriebsschaltung, also nach dem Einspeisen der Netzspannung in den Gleichrichter GL, hält der Widerstand R2 den Mittelpunktsabgriff der Halbbrücke auf dem Potential des positiven Versorgungszweiges. Damit liegt an dem unteren Brückentransistor T1 praktisch die gesamte Gleichspannung des Elektrolytkondensators C1 an. Wesentlich ist, daß im folgenden die Spannung U_{C5} an dem Anlaufkondensator C5 mit der Spannung der Ansteuerschaltung 1, also der Spannung an dem Kondensator C3, addiert zwischen dem Source-Anschluß und dem Gate-Anschluß des Brückentransistors T1 anliegt, in der Figur als U_{GS}.

Mangels Mitkopplung durch den Steuertransformator L2-HW1/HW2 und mangels Potentialoszillation am Mittelpunkt der Halbbrücke geben die Ansteuerschaltungen AS1 und AS2 zunächst kein Ausgangssignal, so daß die Anlaufschaltung ALS für einen ersten Schaltvorgang sorgen muß. Im vorliegenden Beispielsfall erfolgt ein erstmaliges Einschalten des Brückentransistors T1 durch eine Aufladung des Anlaufkondensators C5 über den Aufladewiderstand R1 seitens einer Netzzuleitung. Wenn die Spannung U_{C5} an dem Anlaufkondensator C5 die für ein erstes Einschalten erforderliche Schwellenspannung zwischen dem Gate-Anschluß und dem Source-Anschluß des Brückentransistors T1 erreicht hat - zu Anfang entsprechen sich die Spannungen U_{C5} und U_{GS}, weil die Ansteuerschaltung AS1 nicht aktiv ist beginnt ein Stromfluß durch den Transistor T1 und den Lastkreis.

Nun setzt der Strom in der Lampendrossel L2 den Mitkopplungsmechanismus in Gang, indem er einen Induktionsstrom in den Sekundärwicklungen HW1 und HW2 entsprechend dem Windungsverhältnis auf dieser Lampendrossel L2 erzeugt. Zwar entlädt der nun leitfähige Transistor T1 zusammen mit der Entladediode D1- das Brückenmittelpunktspotential sinkt - den Anlaufkondensator C5, jedoch lädt der Induktionsstrom in der Sekundärwicklung HW1 über den Widerstand R3 den Kondensator C3 auf und hält den Transistor T1 damit eingeschaltet. Sofern also das erste Aufsteuern des Brükkentransistors T1 durch die Spannung U_{C5} am Anlaufkondensator C5 eine hinreichende Leitfähigkeit in dem Transistor T1 erzeugt hat, kommt jetzt über den Mitkopplungsmechanismus die freischwingende Oszillation in Gang und erreicht über wenige Perioden einen eingeschwungenen Zustand.

Im "normalen" freischwingenden Betrieb sorgt die Potentialoszillation am Brückenmittelpunkt zyklisch für eine Entladung des Anlaufkondensators C5 über die Entladediode D1 und hält damit die Spannung U_{C5} vernachlässigbar klein. Bei dem in Figur 1 gezeigten Ausführungsbeispiel ist der Aufladewiderstand R1 an eine Netzleitung auf der Eingangsseite des Gleichrichters GL angeschlossen. Dies hat folgenden Hintergrund: Es soll mit Sicherheit ein über mehrere Netzhalbwellen stationärer Zustand vermieden werden, der etwa dann auftreten kann, wenn der Laststrom aus in der Lampe EL liegenden Gründen zu einem Zeitpunkt kurzfristig abreißt und damit die Mitkopplung unterbrochen wird und die Spannung U_{C5} gleich der Einschaltschwellenspannung des Brückentransistors T1 ist. Dadurch kompensiert der Gesamtentladestrom über die Entladediode D1 und den Brückentransistor T1 den den Anlaufkondensator C5 aufladenden und über den Aufladewiderstand R fließenden Strom nach Erreichen des stationären Zustands. In diesem stabilen Zustand wäre das Brückenmittelpunktspotential durch die geringe Leitfähigkeit des Transistors T1 bereits fast auf das Potential des negativen Versorgungszweiges herabgezogen, womit die Spannung an dem Elektrolytkondensator C1 der Gesamtspannung an den Kondensatoren C7, C8 und C9 des Lastkreises im wesentlichen entspräche. Die Drain-Source-Spannung am Transistor T1 wäre dann praktisch gleich der Gate-Source-Spannung U_{GS}. In einem solchen Zustand wäre ein erneuter Anlaufversuch erforderlich, der vorliegend dadurch sichergestellt ist, dass die Netzfrequenzoszillation des über den Aufladewiderstand R1 fließenden Ladestroms den Kondensator C5 über den Aufladewiderstand R1 wieder entlädt, wenn die in der Figur 1 eingezeichnete Spannung U_{GL} negativ wird. Dadurch kann erneut ein Anlaufversuch erfolgen.

Aus den in der Beschreibungseinleitung bereits skizzierten Gründen kann es bei negativer Spannung U_{GL}, wenn also der Anlaufkondensator C5 nicht nachgeladen wird, zu Schwierigkeiten mit der Entladung des Anlaufkondensators C5 durch den Aufladewiderstand R1 kommen. Deswegen ist der zusätzliche Entladewiderstand R5 vorgesehen. Die Funktion wurde bereits beschrieben. Durch die hiermit jedenfalls gegebene Entladung des Anlaufkondensators C5 wird der zuvor beschriebene Mechanismus wiederholter Anlaufversuche abgesichert.

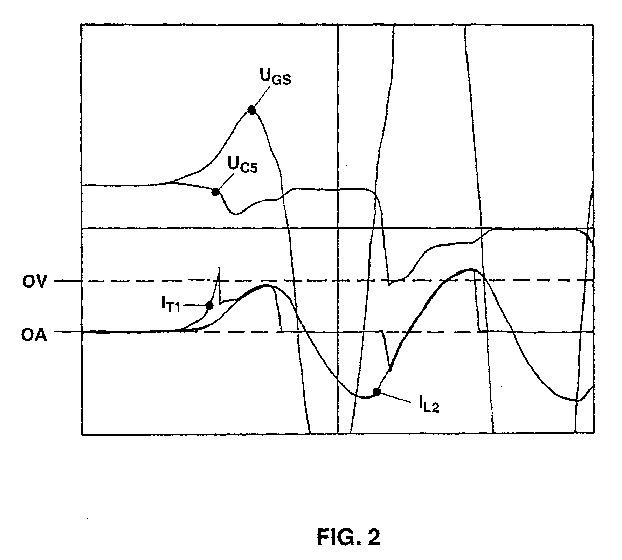

Der vorstehend in bezug auf das Schaltdiagramm in Figur 1 beschriebene Anlaufvorgang ist in anderer Weise in Figur 2 anhand der Gate-Source-Spannung U_{GS} des Transistors T1, der Spannung U_{C5} an dem Anlaufkondensator C5, des Stroms I_{T1} durch den Brückentransistor T1 (über die geschaltete Strecke) und des Stroms I_{L2} durch die Lampendrossel L2 dargestellt. Die Zeitachse läuft von links nach rechts, und die abweichenden Nullpunkte für die Spannungen und die Ströme sind am linken Rand der Figur eingezeichnet.

Zu beachten ist, dass auf der Zeitskala der Oszillatorschwingung der Figur der Aufladevorgang, also zeitliche Anstieg der Spannung U_{C5}, nicht erkennbar ist. Die Figur beginnt nach einem gleichzeitigen Anstieg der Spannungen U_{C5} und U_{GS} mit dem Überschreiten der Einschaltschwellenspannung des Transistors T1, was sich in dem plötzlichen Anstieg des Stroms I_{T1} äußert. Die kurze Stromspitze resultiert dabei aus der schnellen Aufladung des Trapezkondensators C6, jedoch setzt sich der Anstieg von I_{T1} auch danach weiter fort. Der Anstieg des Transistorstroms I_{T1} spiegelt sich gewissermaßen in einem Einbruch der Spannung U_{C5} In dem Zeitverlauf der Spannung U_{C5} zeigt sich dabei ein zeitlich relativ frühes Abnehmen des Entladungsvorganges, also ein leichter Wiederanstieg von U_{C5}, aufgrund eines sich durch den zunehmenden Transistorstrom I_{T1} aufbauenden Spannungsabfalls an dem Ohm'schen Widerstand der geschalteten Strecke im Transistor T1. Deswegen entspricht die Form dieses leichten Wiederanstiegs qualitativ der zeitgleichen Form des Stroms L_{T1}.

Weiterhin zeigt das Diagramm in Figur 2, wie der Lampendrosselstrom I_{L2} mit beginnender Leitfähigkeit des Transistors T1, also durch I_{T1} in Gang gesetzt wird. Der beschriebene Mitkopplungsmechanismus führt bereits beim Anstieg des Transistorstroms L_{T1} zu einem Beginn der Aktivität der Ansteuerschaltungen, d. h. einem Wiederabschalten des Transistors T1 durch die Ansteuerschaltung AS1 und einem darauffolgenden Einschalten des Transistors T2 durch die Ansteuerschaltung AS2. Dementsprechend schwingt die Spannung U_{GS} am Transistor T1 zu negativen Werten hin durch, was sich wiederum in der beginnenden Oszillation des Lampendrosselstroms I_{L2} äußert. Im weiteren Zeitverlauf erkennt man sich einschwingende Oszillationen sowohl der Spannung U_{GS} als auch des Last- bzw. Lampendrosselstroms I_{L2}.

Der zweite Einbruch der Spannung U_{C5} am Anlaufkondensator C5 ist deutlich stärker als der erste, wenn auch qualitativ ähnlich. Die quantitative Zunahme des Effekts geht zurück auf die sehr viel deutlichere Leitfähigkeit des Brückentransistors T1 beim zweiten bzw. ersten rein durch den Mitkoppelungsmechanismus bewirkten Einschaltvorgang. Das Potential des Brückenmittelpunktes fällt nämlich unter das Bezugspotential des negativen Versorgungszweiges, und zwar wegen der Flußspannung der Body-Diode des MOSFETs T1, die den nun erheblichen Stromfluß aus der Lampendrossel L2 führen muß.

Eine wesentliche Aussage des Diagramms in Figur 2 ist, daß der Mitkopplungsmechanismus aufgrund des Stroms I_{L2} über die Induktionsströme in den Sekundärwicklungen HW1 und HW2 zu einem guten Einschalten des Brückentransistors T1 schon beim ersten Anlaufstart trotz der mit dem Stromfluß durch den Transistor T1 verknüpften Entladung des Anlaufkondensators C5 führt.

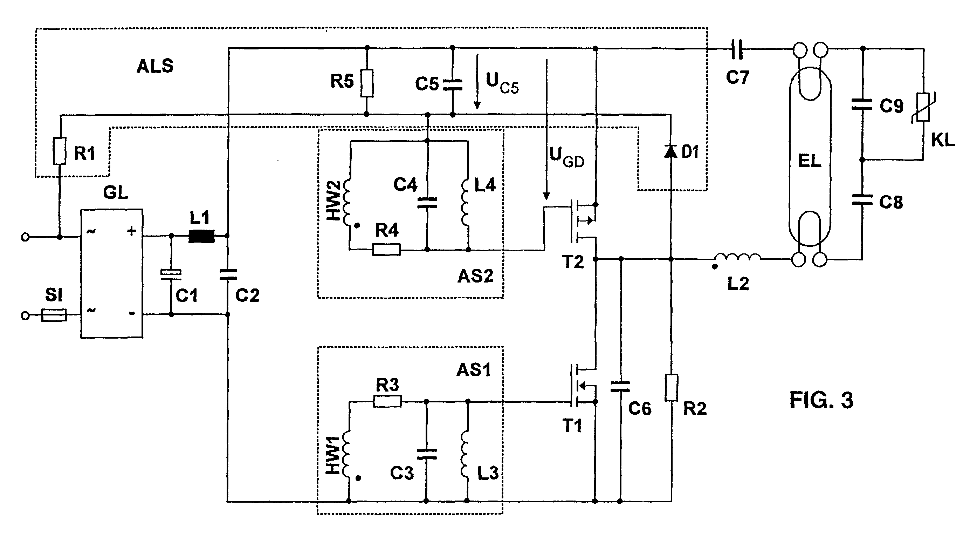

Qualitativ identisch funktioniert das zweite Ausführungsbeispiel, dessen Schaltdiagramm in Figur 3 gezeigt ist. Die Unterschiede zu der Schaltung aus Figur 1 sind wie folgt: Der Brückentransistor T2 ist nun ein P-Kanal-MOSFET anstatt des vorherigen N-Kanal-MOSFET. Dementsprechend liegt der Widerstand R2 nun zwischen dem Brückenmittelpunkt und dem negativen Versorgungszweig. Ferner ist die Ansteuerschaltung AS2 nicht am Brückenmittelpunkt sondern am positiven, oberen Versorgungszweig angeschlossen. Dadurch kann - und dazu dient dieses Ausführungsbeispiel - die Anlaufschaltung ALS nun zwischen die Ansteuerschaltung AS2 und den positiven Versorgungszweig geschaltet sein. Der Aufladewiderstand R1 liegt hier an der anderen Netzzuleitung. Die Polarität der Entladediode D1 ist angepaßt, also umgekehrt. Bei diesem Beispiel liegt ferner der Kondensator C6 zwischen dem Brückenmittelpunkt und dem unteren, also negativen Versorgungszweig; er könnte jedoch genauso gut an der alten Stelle liegen. Die Funktionsweise entspricht im übrigen der zuvor beschriebenen und wird hier nicht erneut erklärt.

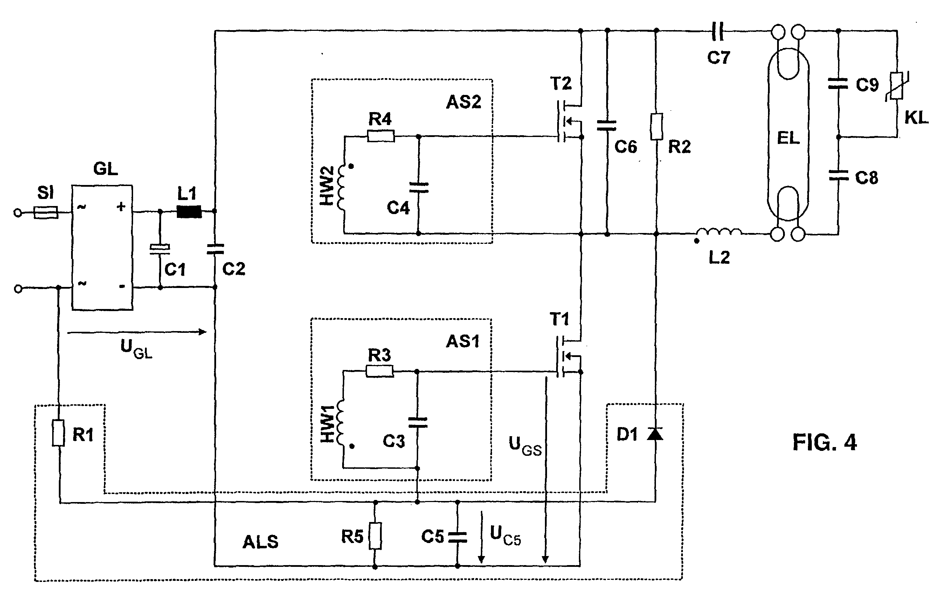

Alternativ können die Ansteuerschaltungen AS1 und AS2, wie in Figur 4 gezeigt, auch aus einer Parallelschaltung aus lediglich einem Kondensator C3, C4 und einer Serienschaltung aus einem Widerstand R3, R4 und einer Sekundärwicklung HW1, HW2 eines Steuertransformators, dessen Primärwicklung die oben aufgeführte Lampendrossel L2 ist, bestehen. Ansonsten ist der Schaltungsaufbau identisch mit der in Figur 1 gezeigten Schaltung.

Als typische Werte für wesentliche Bauteile des ersten Ausführungsbeispiels werden genannt:
- C5:: 100 nF
- R1:: 330 kΩ
- R5:: 47kΩ
- D1:: 1N4005.

## Patentansprüche

1. Betriebsschaltung für eine Niederdruck-Gasentladungslampe (EL) mit einem Gleichrichter, mit einer freischwingenden Halbbrücke mit spannungsgesteuerten Feldeffekt- oder IGBT-Transistoren (T1, T2) zur Erzeugung einer Hochfrequenzausgangsleistung für die Niederdruck-Gasentladungslampe (EL) aus einer Versorgungsleistung und mit einer Anlaufschaltung (ALS) zum Ingangsetzen der freischwingenden Oszillation mit einem zwischen eine Ansteuerschaltung (AS1, AS2) an einem Steueranschluss eines Feldeffekt- oder IGBT-Transistors (T1, T2) und ein Bezugspotential des Feldeffekt- oder IGBT-Transistors(T1, T2) geschalteten Anlaufkondensator (C5), **gekennzeichnet durch** einen zwischen den Anlaufkondensator (C5) und eine Netzeingangsseite des Gleichrichters (GL) geschalteten Aufladewiderstand (R1) und einem parallel zu dem Anlaufkondensator (C5) geschalteten Entladewiderstand (R5).

2. Betriebsschaltung nach Anspruch 1, **dadurch gekennzeichnet, dass** eine Entladediode (D1) zwischen den ansteuerschaltungsseitigen Anschluss des Anlaufkondensators (C5) und den versorgungszweigfernen Anschluss des Feldeffekt- oder IGBT-Transistors (T1, T2) zum zyklischen Entladen des Anlaufkondensators (C5) im Oszillationsbetrieb geschaltet ist.

3. Betriebsschaltung nach Anspruch 1, **dadurch gekennzeichnet, dass** die Ansteuerschaltung (AS1/ AS2) aus einer an den Steueranschluss des Feldeffekt- oder IGBT-Transistors (T1, T2) angeschlossenen Parallelschaltung aus einem Kondensator (C3, C4) und einer Serienschaltung aus einem Widerstand (R3, R4) und einer Sekundärwicklung (HW1, HW2) eines Steuertransformators der Halbbrücke besteht.

4. Betriebsschaltung nach Anspruch 3, **dadurch gekennzeichnet, dass** dem Kondensator (C3, C4) eine Spule (L3, L4) parallel liegt, die mit dem Kondensator (C3, C4) einen Schwingkreis bildet.

5. Betriebsschaltung nach Anspruch 1, **dadurch gekennzeichnet, dass** ein Widerstand (R2) zwischen einem Mittelpunktsabgriff der Halbbrücke und einem Versorgungszweig zur Definition der Potentialzustände der Halbbrücke beim Anlaufen geschaltet ist.

## Claims

1. Operating circuit for a low-pressure gas discharge lamp (EL) having a rectifier, having a free-running half-bridge with voltage-controlled field-effect or IGBT transistors (T1, T2) for generating a high-frequency output power for the low-pressure gas discharge lamp (EL) from a supply power and having a startup circuit (ALS) for starting up the free-running oscillation with a startup capacitor (C5) which is connected between a drive circuit (AS1, AS2) at a control terminal of a field-effect or IGBT transistor (T1, T2) and a reference potential of the field-effect or IGBT transistor (T1, T2), **characterized by** a charging resistor (R1) which is connected between the startup capacitor (C5) and a mains input side of the rectifier (GL), and a discharge resistor (R5) which is connected in parallel with the startup capacitor (C5).

2. Operating circuit according to Claim 1, **characterized in that** a discharge diode (D1 is connected between the drive-circuit-side terminal of the startup capacitor (C5) and the terminal of the field-effect or IGBT transistor (T1, T2) which is remote from the supply branch, in order to discharge the startup capacitor (C5) cyclically in the oscillating mode.

3. Operating circuit according to Claim 1, **characterized in that** the drive circuit (AS1, AS2) is composed of a parallel circuit which is connected to the control terminal of the field-effect or IGBT transistor (T1, T2) and comprises a capacitor (C3, C4), and a series circuit comprising a resistor (R3, R4) and a secondary winding (HW1, HW2) of a control transformer of the half-bridge.

4. Operating circuit according to Claim 3, **characterized in that** a coil (L3, L4) which forms an oscillator circuit with the capacitor (C3, C4) is located in parallel with the capacitor (C3, C4).

5. Operating circuit according to Claim 1, **characterized in that** a resistor (R2) is connected between a centre tap of the half-bridge and a supply branch in order to define the potential states of the half-bridge during starting up.

## Revendications

1. Circuit pour faire fonctionner une lampe à décharge dans un gaz à basse pression (EL), comprenant un redresseur, un demi-pont auto-oscillant composé de transistors à effet de champ ou IGBT (T1, T2) commandés par tension pour la production d'une puissance de sortie à haute fréquence pour la lampe à décharge dans un gaz à basse pression (EL) à partir d'une puissance d'alimentation et un circuit de démarrage (ALS) destiné à la mise en marche de l'oscillation auto-oscillante et comportant un condensateur de démarrage (C5) branché entre un circuit de commande (AS1, AS2) à une borne de commande d'un transistor à effet de champ ou IGBT (T1, T2) et un potentiel de référence du transistor à effet de champ ou IGBT (T1, T2), **caractérisé par** une résistance de charge (R1) branchée entre le condensateur de démarrage (C5) et un côté d'entrée de réseau du redresseur (GL) et par une résistance de décharge (R5) branchée parallèlement au condensateur de démarrage (C5).

2. Circuit selon la revendication 1, **caractérisé par le fait qu'**une diode de décharge (D1) est branchée entre la borne côté circuit de commande du condensateur de démarrage (C5) et la borne, éloignée de la branche d'alimentation, du transistor à effet de champ ou IGBT (T1, T2) en vue de la décharge cyclique du condensateur de démarrage (C5) lors du fonctionnement en oscillation.

3. Circuit selon la revendication 1, **caractérisé par le fait que** le circuit de commande (AS1, AS2) est constitué d'un circuit parallèle qui est composé d'un condensateur (C3, C4) et d'un circuit série formé d'une résistance (R3, R4) et d'un enroulement secondaire (HW1, HW2) d'un transformateur de commande du demi-pont et qui est raccordé à la borne de commande du transistor à effet de champ ou IGBT (T1, T2).

4. Circuit selon la revendication 3, **caractérisé par le fait qu'**une bobine (L3, L4) est en parallèle avec le condensateur (C3, C4) et forme un circuit oscillant avec le condensateur (C3, C4).

5. Circuit selon la revendication 1, **caractérisé par le fait qu'**une résistance (R2) est branchée entre une prise médiane du demi-pont et une branche d'alimentation pour la définition des états de potentiel du demi-pont lors du démarrage.
